**Europäisches Patentamt**

**European Patent Office**

**Office européen des brevets**

(19)

(11) Veröffentlichungsnummer : **0 359 113 B1**

(12)

# EUROPÄISCHE PATENTSCHRIFT

(45) Veröffentlichungstag der Patentschrift :
**18.03.92 Patentblatt 92/12**

(51) Int. Cl.⁵ : **B05B 7/14,** B65G 53/46

(21) Anmeldenummer : **89116472.5**

(22) Anmeldetag : **06.09.89**

(54) **Vorrichtung zum kontinuierlichen Fördern von Pulver in einen Gasstrom.**

(30) Priorität : **14.09.88 DE 3831256**

(43) Veröffentlichungstag der Anmeldung :
**21.03.90 Patentblatt 90/12**

(45) Bekanntmachung des Hinweises auf die
Patenterteilung :
**18.03.92 Patentblatt 92/12**

(84) Benannte Vertragsstaaten :
**CH FR GB IT LI**

(56) Entgegenhaltungen :
**DE-A- 2 029 309
GB-A- 1 599 846
US-A- 3 517 861
US-A- 4 154 486
US-A- 4 381 898**

(73) Patentinhaber : **THE PERKIN-ELMER
CORPORATION
761 Main Avenue
Norwalk Connecticut 06859-0181 (US)**

(72) Erfinder : **Kostecki, Michael
Taunusring 18
W-6200 Wiesbaden-Delkenheim (DE)**
Erfinder : **Rader, Frank
Am Markt 7
W-6234 Hattersheim (DE)**

(74) Vertreter : **Patentanwälte Grünecker,
Kinkeldey, Stockmair & Partner
Maximilianstrasse 58
W-8000 München 22 (DE)**

## Beschreibung

Die Erfindung betrifft eine Vorrichtung zum kontinuierlichen Fördern von Pulver in einen Gasstrom mit einem Vorratsbehälter für das Pulver, einer über den Boden des Vorratsbehälters drehbaren Scheibe mit Lochungen zur Aufnahme von Pulver aus dem Vorratsbehälter, und mit einer Gaszuführleitung und einer Gas-/Pulverabführleitung, deren Enden an einer von dem Pulveraufnahmebereich der Scheibe entfernt liegenden Stelle auf einander gegenüberliegenden Seiten der Scheibe angeordnet sind.

Zur Durchführung etwa des Flammsprüh- oder des Plasmasprühverfahrens zur Herstellung von hoch korrosions- und abriebfesten Oberflächen ist es notwendig, das zu versprühende Pulver kontinuierlich in vorbestimmter Menge pro Zeit in einem Gasstrom an die Sprühdüse zu fördern. Hierzu ist bereits die US-Patentschrift 3 517 861 bekannt geworden, in der ein Vorratsbehälter für das Pulver beschrieben ist, über dessen Boden eine exzentrisch in bezug auf den zylindrischen Vorratsbehälter angeordnete Scheibe vorgesehen ist, die mit einem oder mehreren Kränzen von Lochungen zur Aufnahme von Pulver aus dem Vorratsbehälter versehen ist. Aufgrund der exzentrischen Anordnung der Scheibe ragt diese mit einem Teil ihres Umfanges aus dem Vorratsbehälter heraus. An dieser außerhalb des Vorratsbehälters liegenden Stelle wird das in den Löchern der Scheibe mitgenommene Pulver an den Gasstrom übergeben, indem über der Scheibe eine Gaszuführleitung mündet, die mit einer unterhalb der Scheibe angeordneten Gas-/Pulverabführleitung fluchtet. Mit dieser Anordnung kann zwar eine verhältnismäßig genaue Pulverflußmenge eingestellt und auch in einem verhältnismäßig großen Bereich von Flußmengen variiert werden. Ein wesentlicher Nachteil dieser Vorrichtung besteht jedoch darin, daß es schwierig ist, auch einen kontinuierlichen stetigen Fluß an Pulver zu erreichen, wenn lediglich kleinere Mengen von einem vorbestimmten Pulver verspritzt werden soll. Da das zu versprühende Pulver nicht mit Luft in Berührung kommen darf, muß üblicherweise das nicht verbrauchte Pulver beim Übergang von einem Pulver zu einem anderen Pulver als Abfall ausgesondert werden, da das Pulver beim Entleeren des Vorratsbehälters zwangsläufig mit Luft in Berührung kommt.

Aus der US-Patentschrift 4 808 042 ist auch bereits ein Pulverförderer zum Fördern von gesteuerten Mengen von Pulver in einen Gasstrom einer Überschallplasmasprühpistole bekannt geworden, bei dem sich in dem im wesentlichen zylindrisch ausgebildeten Pulvervorratsbehälter über dem Boden eine Pulvermitnahmescheibe dreht. Über einen geringen Winkelbereich ist diese Pulvermitnahmescheibe abgedeckt durch einen sich gegen das Innere und nach abwärts neigenden Teil der Behälterinnenwand. Dieser Teil der Innenwand endet an einer in den Behälter vorstehenden Drehspindel. Unterhalb dieser geneigten Innenwandfläche ist in dem Boden des Vorratsbehälters eine Öffnung vorgesehen, in die das von den groben Mitnehmern der sich drehenden Scheiben mitgenommene Pulver befördert wird. Das Pulver fällt somit in einen zweiten kleineren Vorratsbehälter und gelangt infolge der Schwerkraft auf eine zweite drehbare Pulverförderscheibe, auf deren Rand radial ausgerichtete Stege im Abstand voneinander angeordnet sind. Die Stege bestimmen dabei im wesentlichen in Verbindung mit einem Führungskanal, durch den die Stege beim Drehen der Scheibe geführt werden, den Hohlraum zwischen sich, der mit Pulver füllbar ist. In einer von der Füllstellung abweichenden anderen Drehstellung der Scheibe ist ein in radialer Richtung der Scheibe gerichteter Gastrahl vorgesehen, der das Pulver in eine Gas-/Pulvertransportvorrichtung bläst. Die Pulverfördervorrichtung ist verhältnismäßig aufwendig, indem zwei drehbare Scheiben mit entsprechenden Pulverleit- und -zuführvorrichtungen zu diesen Scheiben vorgesehen sein müssen, wodurch die Wahrscheinlichkeit von Ausfällen erhöht wird. Außerdem muß hierdurch in dem verhältnismäßig großen Raum für Pulver eine entsprechend große Menge an Pulver zur Verfügung stehen, um überhaupt eine Förderung zu ermöglichen. Beim Sprühen von nur kleinen Mengen und häufigem Wechsel der Pulverart geht sodann die gesamte Pulvermenge verloren.

Aus der US-Patentschrift 4 381 898 ist auch bereits ein Vorratsbehälter bekannt, bei dem innerhalb des Vorratsbehälters eine konisch zu einer unteren Abführleitung für das Pulver spitz zulaufende Gleitfläche für das Pulver vorgesehen ist. Die Förderung des Pulvers erfolgt bei dieser Anordnung dadurch, daß das Innere des Vorratsbehälters auf einem höheren Druck gehalten wird als der Druck des Gases, in das das Pulver gefördert werden soll. Mit Hilfe der Druckdifferenz zwischen den genannten beiden Drücken wird gleichzeitig die Flußmenge des Pulvers bestimmt. Um mit einer solchen Vorrichtung auch schwer fließfähige Pulver zu verarbeiten, sind in die Seitenwände der inneren Leitfläche für das Pulver mündende Gasauslässe vorgesehen, die zur Fluidisierung des Pulvers oberhalb des unteren Abführendes für das Pulver in dem Vorratsbehälter dienen. Auch mit einer solchen Vorrichtung ist es nicht möglich, gezielt geringe Mengen von Pulver für die Verarbeitung von kleineren Beschichtungsflächen einzusetzen. Denn bei dieser Vorrichtung wird bereits zu dem Zeitpunkt, zu dem Gas in den Vorratsbehälter zur Fluidisierung des Pulvers eingeleitet wird, gleichzeitig auch bereits Pulver gefördert. Je nach der Art des Pulvers ist eine Einlaufzeit von 20 bis 60 Sekunden erforderlich, bis der Pulverstrom gleichmäßig mit der vorbestimmten Flußmenge fließt.

Aus der britischen Patentschrift 1 599 846 war auch bereits eine Pulverzuführvorrichtung bekannt, bei der in einem zylindrischen Pulvervorratsbehälter eine Scheibe drehbar angeordnet ist, auf der in einem radialen Abstand von der Drehachse Durchgänge ausgebildet sind, die sich beim Drehen der Scheibe in einem vollen Vorratsbehälter mit Pulver füllen. Innerhalb des Behälters ist an einer bestimmten Stelle über der Drehscheibe und im radialen Abstand der Durchgangslöcher in der Scheibe eine Gaszufuhrleitung angeordnet, zu der hiermit fluchtend auf der gegenüberliegenden Seite der Scheibe eine Gas- und Pulverabführleitung angeordnet ist.

Aus der britischen Patentschrift 1 416 165 war auch eine andere Pulverfördervorrichtung bekannt geworden, bei der in einem zylindrischen Pulvervorratsbehälter eine Art Revolverkopf um eine gemeinsame Drehachse in dem Pulvervorratsbehälter vorgesehen ist. In dem Revolverkopf sind parallel zu der Drehachse des Revolverkopfes verlaufende Röhren vorgesehen, in die an ihrem offenen Ende von oben Pulver hineinfallen kann. Die Röhren sind nacheinander in eine Pulverübertagungsstellung drehbar, in der das obere Ende von dem Pulverbehälter abgetrennt und mit einer Gasdruckleitung verbunden wird, während das untere Ende des mit Pulver gefüllten Rohres zu einer Pulver- und Gasabführleitung fluchtend angeordnet ist, so daß das mit Pulver gefüllte Rohr praktisch durch den Gasstrom leergeblasen werden kann.

Der vorliegenden Erfindung liegt deshalb die Aufgabe zugrunde, eine Vorrichtung der eingangs erwähnten Art anzugeben, mit der kleine Mengen von Pulver mit der gewünschten Gleichmäßigkeit versprizt werden können, ohne daß jeweils ein großer Teil an Pulver bei einem Chargenwechsel als Abfall verlorengeht.

Diese Aufgabe wird bei einer Vorrichtung der eingangs erwähnten Art erfindungsgemäß dadurch gelöst, daß innerhalb des Vorratsbehälters eine trichterförmige, bis gegen die Scheibe spitz zulaufende Leitfläche für das Pulver vorgesehen ist, und daß ein senkrechter, zylindrischer von der Scheibe bis zu seiner Schnittkante mit der Leitfläche reichender Schacht vorgesehen ist, der die Spitze der trichterförmigen Leitfläche berührt. Hierdurch wird eine Anordnung geschaffen, bei der nur eine kleine Fläche der Scheibe, die durch den Schacht begrenzt wird, als Pulveraufnahmebereich wirksam ist. Diese kleine Fläche der Scheibe ist jedoch aufgrund der Ausbildung der Leitfläche und der Anordnung des Schachtes auch bei kleinsten zu verarbeitenden Mengen jeweils mit einer ausreichenden Schicht von Pulver bedeckt. Um die Lochungen in der Scheibe genau mit Pulver zu füllen, ist es deshalb nicht notwendig, den Gesamtbehälter zu kippen. Auch bei Unterbrechungen des Spritzverfahrens kann das Spritzen unmittelbar wieder mit der vorbestimmten Pulverflußmenge aufgenommen werden. Die Anlaufzeit ist praktisch vernachlässigbar.

Gemäß einer zweckmäßigen Ausgestaltung reicht der Schacht seitlich bis zur Gehäuseinnenwand des Vorratsbehälters.

Der Schacht kann an sich jede beliebige Querschnittsform aufweisen, von langlochförmig über elliptisch bis zu einem kreisförmigen Querschnitt. Entsprechend ist die Form der Bodenfläche, die der Schacht auf der drehbaren Scheibe begrenzt.

Als besonders vorteilhaft hat sich eine Ausführungsform herausgestellt, bei der in der den Schacht begrenzenden Seitenwand ein Einlaß für ein Fluidisierungsgas ausgebildet ist. Mit einer solchen Ausgestaltung können auch weniger fließfähige Pulver mit der gewünschten Gleichmäßigekit verarbeitet werden. Insgesamt hat diese Ausgestaltung den Vorteil, daß das Pulver auch im fluidisierten Zustand gehalten werden kann, wenn das Spritzverfahren aus irgendwelchen Gründen unterbrochen werden muß. Dies trägt dazu bei, daß auch für solche weniger fließfähigen Pulver das Sprühverfahren nach einer Unterbrechung sofort weitergeführt werden kann, ohne daß es einer besonderen Anlaufzeit bedürfte.

Vorzugsweise ist der Einlaß für das Fluidisierungsgas so angeordnet, daß er auf der der Spitze der trichterförmigen Leitfläche abgewandten Seite der Schachtwand liegt. Eine günstige Lage des Einlasses ist aber auch im rechten Winkel hierzu. Weiterhin ist es zweckmäßig, daß der Einlaß für das Fluidisierungsgas in einem Abstand über dem Boden des Vorratsbehälters, d.h. über der drehbaren Scheibe angeordnet ist.

Ein besonders konstanter Fluß des Pulvers läßt sich auch bei schwer fließenden Pulvern dadurch erreichen, daß der Einlaß für das Fluidisierungsgas sich in Form eines Schlitzes über einen Teil des Umfangs des Schachtes erstreckt.

In dem Einlaß für das Fluidisierungsgas ist vorzugsweise eine Scheibe aus Sintermaterial angeordnet, um das Gas möglichst diffus in den Vorratsbehälter einleiten zu können.

Im folgenden soll die Erfindung näher anhand von in der Zeichnung dargstellten vorzugsweisen Ausführungsbeispielen erläutert werden. In der Zeichnung zeigen:

Fig.1 eine vereinfachte perspektivische Darstellung, teilweise im Schnitt einer Ausführungsform der Erfindung,

Fig.2 einen Schnitt durch die in Fig. 1 gezeigte Vorrichtung entlang der Linie II-II,

Fig.3 eine Teillängsschnittansicht durch die Füllstation und,

Fig.4 eine Teillängsschnittansicht durch die Pulverabführstation.

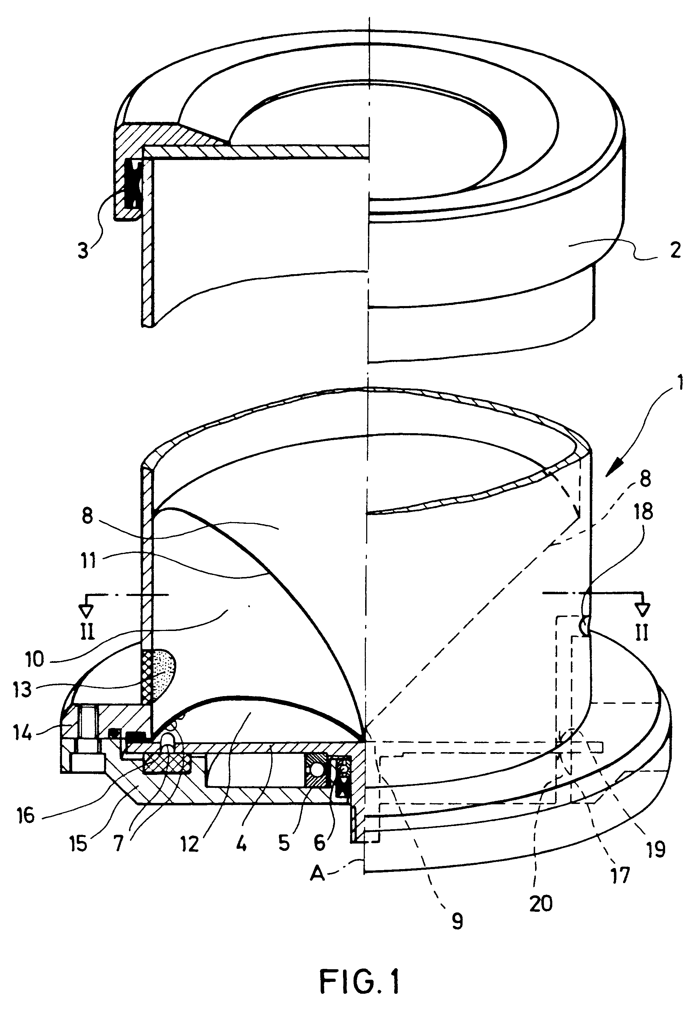

In Fig. 1 ist ein allgemein mit 1 bezeichneter Vorratsbehälter für Pulver gezeigt. Der Vorratsbehälter ist mit einem über einen Ringdichtgummi 3 luftdicht verschließenden Deckel 2 verschlossen. Der Boden des Behälters wird durch eine um die zentrische Drehachse A drehbare Scheibe 4 gebildet. Die Scheibe ist über Kugellager 5, 6 reibungsarm gelagert. In der Scheibe sind auf einem zentrischen Kreis liegende Lochungen 7 ausgebildet, von denen mehrere hintereinander verbunden sind, während nur im Abstand von mehreren Lochungen einige schmale Stege verblieben sind. Die Art der Ausbildung solcher Lochungen ist aus der US-Patentschrift 3 517 861 bekannt.

Am unteren Ende des Vorratsbehälters ist eine sich nach abwärts verjüngende und in einer praktisch in der Oberfläche der Drehscheibe 4 spitz zusammenlaufende Leitfläche für das Pulver angeordnet. Die untere Spitze 9 der sich konisch verjüngenden Leitfläche kann auch in einem geringen Abstand über der Scheibe 4 liegen. Die Leitfläche 8 wird von einem zylinderförmigen Schacht 10, dessen Achse senkrecht verläuft, geschnitten. Der zylindrische Schacht 10 reicht von dem durch die Scheibe 4 gebildeten Boden des Gefäßes bis zu seiner Schnittkante 11 mit der Leitfläche 8. Der Schacht 10 kann an sich einen beliebigen Querschnitt aufweisen, etwa in der Form eines Langloches oder einer Ellipse oder wie im vorliegenden Beispiel in Form einer Kreisfläche. Die Kreisfläche 12 hat einen Durchmesser, der dem Innenradius des Vorratsbehälters 1 entspricht. Die Kreisfläche ist so angeordnet, daß sie an der linken Seite die Innenwand des Vorratsbehälters 1 berührt und auf der rechten Seite mit ihrem äußeren Rand durch die Mittelachse A des Vorratsbehälters geht.

In der der Mittellängsachse A diametral gegenüberliegenden Wand des Schachtes 10 ist eine auch die Gehäusewand des Vorratsbehälters 1 durchsetzende Sinterscheibe 13 eingesetzt. Durch diese Sinterscheibe kann Gas zur Fluidisierung des in dem Behälter 1 enthaltenen Pulvers mit Hilfe nicht näher dargestellter Einrichtungen eingeblasen werden. Aufgrund der Sinterscheibe wird das Gas diffus in den Schacht 10 geleitet.

Der Vorratsbehälter ist in Form eines an seinem unteren Ende mit einem Flansch 14 versehenen Zylinders ausgebildet. Der Zylinder ist über den Flansch 14 sodann mit einer Grundplatte 15 fest verbunden. Unterhalb der Scheibe 4 und insbesondere unterhalb der auf einem Kreis liegenden Lochungen 7 ist in der Grundplatte 15 ein Dichtungsring 16 eingelassen, der lediglich an der schematisch angedeuteten Stelle 17 unterbrochen ist. Die Stelle 17 liegt in einem Bereich des Vorratsbehälters, der der Stelle etwa diametral gegenüberliegt, an der der Schacht 10 die Innenwand des zylindrischen Vorratsbehälters 1 berührt. In diesem Bereich ist unterhalb der Leitfläche 8 eine Zuleitung 18 für ein Transportgas vorgesehen. Das offene Ende der Zuleitung 18 mündet bündig mit und oberhalb der Scheibe 4. Mit dem Ende 19 fluchtend, jedoch unterhalb der Scheibe 4 ist das offene Ende einer Abführleitung 20 für das Transportgas zusammen mit einer abgemessenen Menge Pulver vorgesehen. Das offene Ende 19 sowie die Abführleitung 20 liegen auf einem Radius um die Zantralachse A auf dem auch die Lochungen 19 liegen, so daß bei einer Drehung der Scheibe 4 die Lochungen zwischen den offenen Enden der Rohrleitungen 18 und 20 durchlaufen.

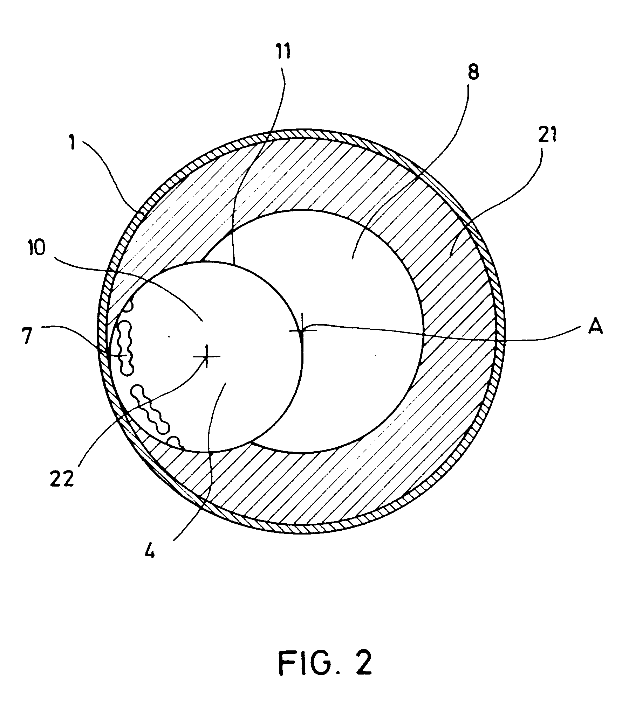

Wie aus der Fig. 2 zu ersehen ist, braucht die Leitfläche 8 nicht nur aus etwa einem Blech zu bestehen, sondern der diese Leitfläche 8 bildende Teil kann auch als Oberfläche eines Vollteiles ausgebildet sein, dessen Schnittfläche 21 in Fig. 2 gezeigt ist. Wie weiterhin aus Fig. 2 zu ersehen ist, ist der Schacht 10 in Form eines Zylinders, der parallel zu der Längsmittelachse A verläuft aus diesem Vollteil herausgeschnitten. Der Schacht hat im vorliegenden Ausführungsbeispiel einen kreisförmigen Querschnitt mit dem Mittelpunkt 22. Durch den Schnitt dieser kreiszylindrischen Aussparung des Schachtes 10 mit der Leitfläche ergibt sich die bereits in Fig. 1 gezeigte Schnittkante 11. Bei dem in Fig. 2 gezeigten Ausführungsbeispiel reicht der Schacht 10 bis an die Innenwand des Vorratsbehälters 1 und andererseits auf der Innenseite bis an die Mittellängsachse A. Der Boden des Schachtes 10 wird durch die Scheibe 4 gebildet, in der die Lochungen 7 ausgebohrt oder ausgestanzt sind.

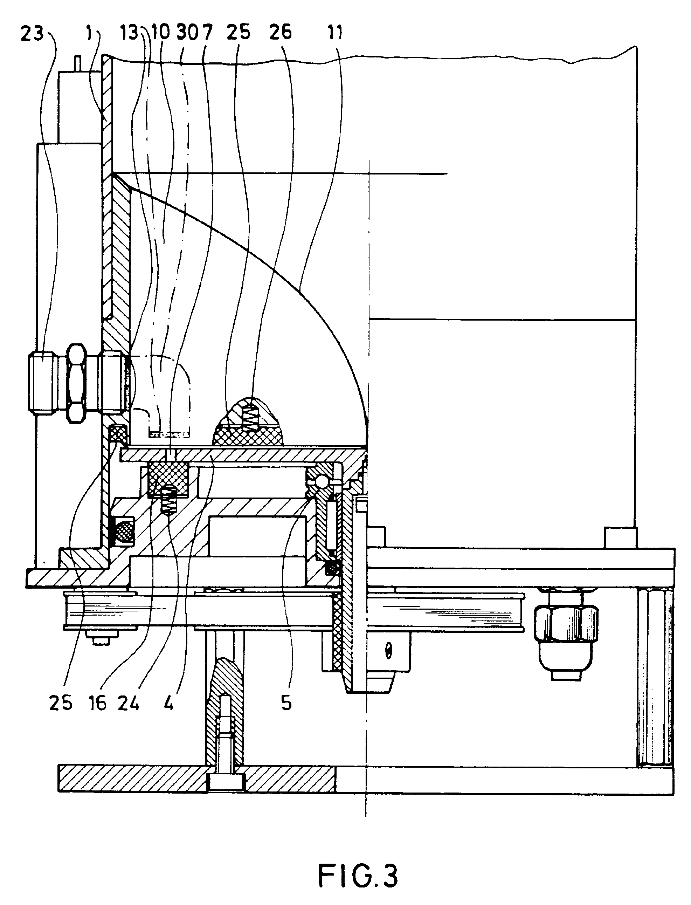

In Fig. 3 ist lediglich nochmals im einzelnen der in Fig. 1 schematisch dargestellte Ausbau gezeigt, weshalb gleiche Teile mit gleichen Bezugszeichen versehen sind. An dem Vorratsbehälter 1 ist eine Gaszuführleitung 23 befestigt, die an ihrem der Innenseite des Vorratsbehälters 1 zugewandten Seite die bereits erwähnte Scheibe aus einem Sintermaterial 13 aufweist. Ferner ist zu ersehen, daß die Dichtung 16 auf der Unterseite der Lochungen 7 mit Hilfe einer Feder 24 gegen die Unterseite der Scheibe 4 gedrückt wird. In ähnlicher Weise wird ein entlang dem unteren Ende des Schachtes 10 verlaufender Dichtungsring 25 mit Hilfe eines Federelementes 26 gegen die Oberseite der Scheibe 4 gedrückt.

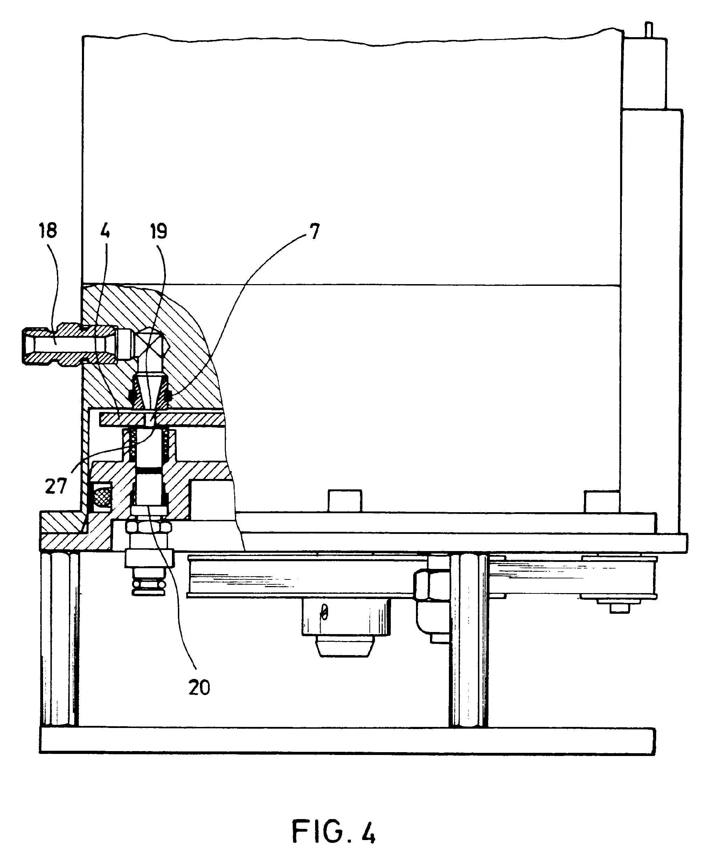

Aus der Fig. 4 ist die an sich bereits aus der US-Patentschrift 3 517 861 bekannte Abführung des Pulvers in das Trägergas dargestellt. Oberhalb der Scheibe 4 mündet das offene Ende 19 der Zuleitung 18 für das Transportgas. Unterhalb der Scheibe 4 liegt das offene Ende 27 der Gas-/Pulverabführleitung 20. Die Lochungen 7 in der Scheibe 4 laufen bei einer Drehung der Scheibe zwischen diesen beiden offenen Enden der Leitungen 18 und 20 vorbei.

Die Arbeitsweise der Vorrichtung ist wie folgt. Das zu verspritzende Pulver wird nach Abnahme des Deckels 3 in den Behälter 1 eingefüllt und der Behälter wird sodann mit dem Deckel 2 wieder luftdicht verschlossen. Das Einfüllen erfolgt vorzugsweise unter einer Schutzgasatmosphäre. Die Ausgestaltung der Leitfläche 8 sowie die des Schachtes 10 sind so, daß auch bei kleinen Mengen an Pulver in dem Vorratsbehälter 1 der Boden 12 des Schachtes 10 jeweils mit Pulver bedeckt ist. Da der Schacht 10 andererseits eine verhältnismäßig kleine Fläche bildet, wird auch nur wenig Pulver benötigt, um über dieser Fläche etwa eine Pulverschicht von mindestens 1 cm einzuhalten. Das in den Schacht 10 fallende Pulver füllt die Lochungen 7 in der Scheibe 4 und diese Lochungen werden bei einer Drehung der Scheibe 4 durch den Schacht 10 fortlaufend neu gefüllt. Aufgrund des Abdichtungsrings 16 unterhalb der Scheibe bleiben die Lochungen auch bei einer Drehung der Scheibe 4 gefüllt und das über die Oberseite der Scheibe 4 hinaus vorstehenden Material wird beim Drehen der Scheibe 4 aus dem Bereich des Schachtes heraus durch den Dichtungsring 25 abgestreift und zurückgehalten.

Das in den Lochungen 7 enthaltene Pulvermaterial gelangt sodann bei einer weiteren Drehung der Scheibe an die Stelle 17, in der das untere Ende 19 der Zuleitung 18 über eine Lochung und das offene Ende der Abführleitung 20 unterhalb einer Lochung liegt. In dieser Stellung kann somit das Pulver durch das Gas aus der Leitung mitgerissen und über die Abführleitung 20 abgeleitet werden.

Insbesondere für die Verarbeitung von schwer fließfähigen Pulvern hat sich die Einführung eines Fluidisierungsgases über die Sintermetallscheibe 13 in den Schacht 10 als nützlich erwiesen. Es hat sich herausgestellt, daß diese Maßnahme aber auch bei gut fließenden Pulvern angewandt werden kann und daß insgesamt hierdurch die Menge an Pulver, die notwendig ist, um einen kontinuierlichen und genau bemessenen Zufluß von Pulver aufrechtzuerhalten, äußerst klein gehalten werden kann. Aufgrund dieser Tatsache können somit auch kleinere Menge von Pulver zur Beschichtung von kleineren Flächen verwandt werden, ohne daß bei diesem Vorgang größere Mengen an Pulver als Abfallpulver zurückbleiben, wodurch die Betriebskosten erheblich gesenkt werden können. In der Zeichnung ist lediglich ein kreisförmiger Einlaß an einer Stelle der Innenwand des Schachtes 10 für das Fluidisierungsgas gezeigt. Anstelle einer kreisförmigen Sintermetallscheibe könnte aber auch ein etwa halbkreisförmiger Ring oder noch ein weiterer, größerer Ring aus Sintermetall in der Innenwand des Schachtes vorgesehen sein, über die sodann ein Fluidisierungsgas in den Schacht eingeblasen wird.

In Fig. 3 ist in gestrichelten Linien eine weitere Möglichkeit in Form eines gekrümmten Rohres 30 vorgesehen, das eine Verlängerung der Gaszuführungsleitung in den Schacht 10 hinein darstellt. In dem freien offenen Ende des Rohres 30, das parallel zu der Scheibe 4 und im Abstand hierzu, direkt über der Lochreihe 7 angeordnet ist, kann sodann eine Sintermetallscheibe 13 vorgesehen sein.

## Patentansprüche

1. Vorrichtung zum kontinuierlichen Fördern von Pulver in einen Gasstrom mit einem Vorratsbehälter (1) für das Pulver, einer über dem Boden des Vorratsbehälters drehbaren Scheibe (4) mit Lochungen (7) zur Aufnahme von Pulver aus dem Vorratsbehälter (1), und mit einer Gaszuführleitung (18) und einer Gas-/Pulverabführleitung (20), deren Enden an einer von dem Pulveraufnahmebereich der Scheibe entfernt liegenden Stelle auf einander gegenüberliegenden Seiten der Scheibe angeordnet sind, **dadurch gekennzeichnet,** daß innerhalb des Vorratsbehälters (1) eine trichterförmige, bis gegen die Scheibe (4) spitz zulaufende Leitfläche (8) für das Pulver vorgesehen ist, und daß ein senkrechter, zylindrischer, von der Scheibe (4) bis zu seiner Schnittkante (11) mit der Leitfläche (8) reichender Schacht (10) vorgesehen ist, der die Spitze der trichterförmigen Leitfläche berührt.

2. Vorrichtung nach Anspruch 1, **dadurch gekennzeichnet,** daß der Schacht (10) seitlich bis zur Gehäuseinnenwand des Vorratsbehälters (1) reicht.

3. Vorrichtung nach einem der Ansprüche 1 oder 2, **dadurch gekennzeichnet,** daß der Schacht (10) eine kreisförmige Bodenfläche (12) begrenzt.

4. Vorrichtung nach einem der Ansprüche 1 bis 3, **dadurch gekennzeichnet,** daß in der den Schacht (10) begrenzenden Seitenwand ein Einlaß (13) für ein Fluidisierungsgas vorgesehen ist.

5. Vorrichtung nach Anspruch 4, **dadurch gekennzeichnet,** daß der Einlaß (13) für das Fluidisierungsgas auf der der Spitze (9) der trichterförmigen Leitfläche (8) abgewandten Seite der Schachtwand liegt.

6. Vorrichtung nach einem der Ansprüche 4 oder 5, **dadurch gekennzeichnet,** daß der Einlaß für das Fluidisierungsgas in einem Abstand über dem Boden (12) des Vorratsbehälters (1) angeordnet ist.

7. Vorrichtung nach einem der Ansprüche 4 bis 6, **dadurch gekennzeichnet,** daß der Einlaß für das Fluidisierungsgas sich in Form eines Schlitzes über einen Teil des Umfangs des Schachtes (10) erstreckt.

8. Vorrichtung nach einem der Ansprüche 4 bis 6, **dadurch gekennzeichnet,** daß der Einlaß für das Fluidisierungsgas in Form eines in den Vorratsbehälter hineinragenden, gekrümmten Rohres (26) ausgebildet ist, dessen freies Ende parallel zu der Scheibe (4) und dem Abstand über der Lochreihe (7) angeordnet ist.

9. Vorrichtung nach einem der Ansprüche 4 bis 8, **dadurch gekennzeichnet,** daß in dem Einlaß (13) für das Fluidisierungsgas bzw. in dem freien Endes des Rohres eine Sintermaterialscheibe angeordnet ist.

## Claims

1. Apparatus for a continuous supply of powder into a current of gas, comprising a reservoir (1) for the powder, a disc (4) having perforations (7) and rotatable above the base of the reservoir to receive powder therefrom, end comprising a gas supply line (18) end a gas/powder discharge line (20), the ends of which are disposed at opposite sides of the disc at a place distant from the powder receiving zone of the disc, characterised in that a funnel-shaped guide surface (8) tapering to a point towards the disc (4) is provided for the powder and in that a vertical cylindrical chute (10) is provided which extends from the disc (4) as far as its edge (11) intersecting the guide surface (8), said chute (10) touching the point of the funnel-shaped guide surface.

2. Apparatus according to claim 1, characterised in that the chute (10) extends laterally as far as the inner wall of the housing of the reservoir (1).

3. Apparatus according to claim 1 or 2, characterised in that the chute (10) defines a circular base surface (12).

4. Apparatus according to any one of claims 1 to 3, characterised in that an inlet (13) for a fluidising gas is provided in the side wall defining the chute (10).

5. Apparatus according to claim 4, characterised in that the inlet (13) for the fluidising gas is situated on that side of the chute wall which is remote from the point (9) of the funnel-shaped guide surface (8).

6. Apparatus according to claim 4 or 5, characterised in that the inlet for the fluidising gas is disposed at a distance above the base (12) of the reservoir (1).

7. Apparatus according to any one of claims 4 to 6, characterised in that the inlet for the fluidising gas extends in the form of a slot over part of the periphery of the chute (10).

8. Apparatus according to any one of claims 4 to 6, characterised in that the inlet for the fluidising gas is in the form of a curved tube (26) extending into the reservoir, the free end of said tube (26) being disposed parallel to the disc (4) and the space above the row of holes (7).

9. Apparatus according to any one of claims 4 to 8, characterised in that a sintered material disc is disposed in the inlet (13) for the fluidising gas or in the free end of the tube.

## Revendications

1. Dispositif pour débiter en continu une poudre dans un courant de gaz comprenant un réservoir de stockage (1) pour la poudre, une plaque (4) qui peut tourner au-dessus du fond du réservoir de stockage et est munie de perçages (7) destinés à recevoir de la poudre en provenance du réservoir de stockage (1), une conduite d'amenée de gaz (18) et une conduite d'évacuation de gaz/de poudre (20) dont les extrémités sont disposées sur des côtés opposés de la plaque, à un endroit éloigné de la zone de réception de poudre de la plaque, caractérisé en ce qu'une surface de guidage (8) en forme d'entonnoir qui se termine en pointe contre la plaque (4) est prévue pour la poudre et en ce qu'il est prévu une cuve (10) verticale et cylindrique qui s'étend de la plaque (4) jusqu'à son bord d'intersection (11) avec la surface de guidage (8) et touche la pointe de la surface de guidage en forme d'entonnoir.

2. Dispositif selon la revendication 1, caractérisé en ce que la cuve (10) s'étend latéralement jusqu'à la paroi intérieure du réservoir de stockage (1).

3. Dispositif selon l'une des revendications 1 ou 2, caractérisé en ce que la cuve (10) délimite une surface de fond circulaire (12).

4. Dispositif selon l'une des revendications 1 à 3, caractérisé en ce qu'une entrée (13) pour un gaz de fluidification est prévue dans la paroi latérale limitant la cuve (10).

5. Dispositif selon la revendication 4, caractérisé en ce que l'entrée (13) pour le gaz de fluidification se trouve sur le côté de la paroi de la cuve qui est éloigné de la pointe (9) de la surface de guidage en forme d'entonnoir (8).

6. Dispositif selon l'une des revendications 4 ou 5, caractérisé en ce que l'entrée pour le gaz de fluidification est disposée à distance au-dessus du fond (12) du réservoir de stockage (1).

7. Dispositif selon l'une des revendications 4 à 6, caractérisé en ce que l'entrée pour le gaz de fluidification s'étend sous forme de fente sur une partie du pourtour de la cuve (10).

8. Dispositif selon l'une des revendications 4 à 6, caractérisé en ce que l'entrée pour le gaz de fluidification est réalisée sous la forme d'un tuyau coudé (26) qui pénètre dans le réservoir de stockage et dont l'extrémité libre est disposée parallèlement à la plaque (4) et à distance au-dessus de la série de perçages (7).

9. Dispositif selon l'une des revendications 4 à 8, caractérisé en ce qu'une rondelle en matériau fritté est disposée dans l'entrée (13) pour le gaz de fluidification ou dans l'extrémité libre du tuyau.

FIG.1

FIG. 2

FIG.3

FIG. 4